(19) Europäisches Patentamt
European Patent Office
Office européen des brevets

(11) EP 3 374 454 B1

(12) **EUROPEAN PATENT SPECIFICATION**

(45) Date of publication and mention of the grant of the patent:
**13.04.2022 Bulletin 2022/15**

(21) Application number: **16794859.5**

(22) Date of filing: **28.10.2016**

(51) International Patent Classification (IPC):
***C09D 133/12*** *(2006.01)* ***C08F 2/38*** *(2006.01)*

(52) Cooperative Patent Classification (CPC):
(C-Sets available)
**C09D 133/12; C08F 2/22; C08F 2/38; C09D 7/41; C09D 7/48; C09D 7/61;** C08K 3/013; C08K 5/0041
(Cont.)

(86) International application number:
**PCT/US2016/059475**

(87) International publication number:
**WO 2017/083122 (18.05.2017 Gazette 2017/20)**

(54) **AQUEOUS LATEX-BASED COATING COMPOSITIONS**

WÄSSRIGE LATEXBASIERTE BESCHICHTUNGSZUSAMMENSETZUNGEN

COMPOSITIONS DE REVÊTEMENT À BASE DE LATEX AQUEUX

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.11.2015 US 201562254439 P**

(43) Date of publication of application:
**19.09.2018 Bulletin 2018/38**

(73) Proprietor: **Celanese International Corporation**
**Irving, TX 75039 (US)**

(72) Inventors:
- **JUNK, Matthias**
  **64665 Alsbach-Hähnlein (DE)**
- **FICHTNER, Thomas**
  **55278 Dalheim (DE)**
- **KRIEGER, Stephan**
  **65719 Hofheim (DE)**

(74) Representative: **Lahrtz, Fritz et al**
**Simmons & Simmons LLP**
**Prinzregentenstraße 68**
**81675 München (DE)**

(56) References cited:
**US-A1- 2015 307 716** **US-B1- 6 710 112**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
C08F 220/14

## Description

### Field

The present development relates to aqueous, latex-based coating compositions and, in particular, to deep shade or tinted paints and plasters for exterior façade applications.

### Background

Latex-based coating compositions have captured a significant portion of the indoor and outdoor paint and plaster market as a result of the many advantages that such compositions have over solvent-based products. The main advantages of latex-based coating compositions include easy clean up, low odor and fast drying.

Latex-based coating compositions are typically made up of at least three components: a latex binder comprising an aqueous polymer dispersion, one or more pigments and one or more fillers. Additional ingredients may include coalescing aids, thickening aids, dispersing aids, defoamers, biocides, etc. to improve product properties. In the past, white paints and plasters were traditionally used to finish and protect the external surfaces of buildings. However, more recently, there has been an increasing focus on more colorful paints and finishes. As a result new problems have developed particularly around the issue of color fading, that is the unwanted lightening of the color of these paints and finishes over time on the facades of buildings. With certain shades, such as blue and red, this problem can be particularly pronounced often leading to significant color loss after only one or two years. Light, heat, humidity, and atmospheric pollutants, such as ozone, $SO_2$ and $NO_X$, are major factors that contribute to the problem of fading.

Pigments may be divided into two major categories, inorganic and organic pigments. Examples of inorganic pigments are various metal oxides such as C.I. Pigment Red 101, C.I. Pigment Yellow 42, C.I. Pigment Brown 6, C.I. Pigment White 4 and C.I. Pigment White 6. Examples of classes of organic pigments are the anthraquinone, azo, diketopyrrolopyrrole, dioxazine, indanthrone, indigo, isoindoline, isoindolinone, perylene, phthalocyanine, quinacridone, and quinophthalone classes. Carbon black, while containing carbon, is not generally considered to be an organic pigment.

Organic pigments typically provide improved chromatic strength and brilliance of shade as compared to inorganic pigments and hence are favored when intense color is required. However, organic pigments are generally less stable than inorganic pigments and tend to fade faster even when combined with white titanium oxide pigment or with fillers to increase the hiding power and depth of color of the finish.

Consequently, a significant need exists for new formulations of latex-based, exterior wall coating compositions, particularly those containing organic pigments, which are less susceptible to fading due to light, heat, humidity, and atmospheric pollutants.

One important factor which has been demonstrated to influence the shade stability of latex-based coating compositions is the composition of the polymeric binder. For example, International Patent Publication No. WO2014/075969 discloses that the color retention of coating compositions containing organic pigments can be improved through the use of a aqueous polymer dispersion comprising (a) at least two monomers M1 with a glass transition temperature > 25°C, such as styrene/methyl methacrylate or cyclohexyl methacrylate/methyl methacrylate, and (b) at least two monomers M2 with a glass transition temperature < 25°C, such as n-butyl acrylate/2-ethylhexyl acrylate. US2015/307716A1 and US 6710112B1 disclose aqueous polymer dispersions and their use in coating compositions.

According to the present invention, as defined by the appending claims, it has now been found that the use of polymer dispersions produced in the presence of a chain transfer agent and containing very low molecular weight polymers significantly improves the color retention of latex-based exterior wall coating compositions containing organic pigments. This is surprising since the general understanding in the art has been that higher molecular weights are required for polymer stability.

### SUMMARY

In one aspect, the invention resides in an exterior wall coating composition comprising:

(a) an aqueous polymer dispersion formed by emulsion polymerization of at least one ethylenically unsaturated monomer in the presence of a chain transfer agent, wherein the polymer has Fikentscher K value less than 60, preferably less than 55, most preferably less than 50;
(b) at least one organic pigment; and
(c) at least one inorganic filler.

In another aspect, the invention resides in an exterior wall coating composition comprising:

(a) an aqueous polymer dispersion formed by multi-stage emulsion polymerization of at least two ethylenically unsaturated monomers, wherein the polymer in at least one polymerization stage is produced in the presence of a chain transfer agent and has, when polymerized and analyzed alone, a Fikentscher K value less than 60, preferably less than 55, most preferably less than 50 and wherein the polymer(s) with a Fikentscher K value less than 60 comprise at least 30%, preferably at least 50% by weight of the total polymers in the dispersion;
(b) at least one organic pigment; and
(c) at least one inorganic filler.

In some embodiments, the aqueous coating composition further comprises at least one hindered amine light stabilizer.

In a further aspect, the invention resides in the use of the exterior wall coating composition described herein as a façade paint or a plaster or render.

## DETAILED DESCRIPTION

Described herein is an exterior wall coating composition comprising (a) an aqueous emulsion polymer dispersion of at least one ethylenically unsaturated monomer, wherein the polymer is produced in the presence of a chain transfer agent and has a Fikentscher K value less than 60, preferably less than 55, most preferably less than 50, together with (b) one or more organic pigments, and (c) one or more inorganic fillers. The coating composition may optionally also include one or more inorganic pigments and one or more auxiliaries conventionally used in paints and plasters. When applied to the exterior surface of a building, either as a façade paint or a plaster or render, the present coating composition provides a coating with excellent color retention.

The Fikentscher K value, as referenced in DIN EN ISO 1628-1, is a viscosity based estimate of the mean molecular weight of polymers. It is obtained by measuring the relative viscosity $\eta_r$ of the polymer in a suitable solvent at a given concentration c (in g/100 mL) and calculated according to equation (I):

$$K = 1000 \cdot \frac{1.5 \log \eta_r - 1 + \sqrt{1 + 1.5 \log \eta_r \left(1.5 \log \eta_r + 2 + \frac{200}{c}\right)}}{150 + 3c} \qquad \text{Equation (I)}$$

The dimensionless K value is proportional to the molecular weight at constant measurement conditions (solvent and temperature). For the K values referenced herein, N-methyl-2-pyrrolidone is used as solvent and the viscosity measurement is conducted at 20°C.

## Polymer Dispersion

The aqueous emulsion polymer dispersion employed in the present coating composition can be produced by emulsion polymerization of any desired ethylenically unsaturated monomer or mixture thereof capable of undergoing free radical polymerization.

Generally, the monomers used herein are selected from esters of ethylenically unsaturated carboxylic acids, vinyl aromatic compounds and vinyl esters and mixtures thereof as main monomers. The use of monomer mixtures containing esters of ethylenically unsaturated carboxylic acids and/or vinyl aromatic compounds as main monomers is particularly preferred. Main monomers are present in amounts greater than 50 pphm, usually from 70 to 99.9 pphm, where pphm means parts (main monomers) by weight per hundred parts by weight of the total monomers used in the emulsion polymerization process.

Suitable esters of ethylenically unsaturated carboxylic acids for use herein include $C_1$-$C_{18}$ alkyl esters of ethylenically unsaturated carboxylic acids, such as acrylic acid, methacrylic acid, maleic acid and fumaric acid. Examples include methyl acrylate, ethyl acrylate, n-propyl acrylate, isopropyl acrylate, n-butyl acrylate, t-butyl acrylate, 1-hexyl acrylate, 2-ethylhexyl acrylate, heptyl acrylate, octyl acrylate, 2-propylpentyl acrylate, 1-propylheptyl acrylate, lauryl acrylate, methyl methacrylate, methyl ethacrylate, n-propyl methacrylate, isopropyl methacrylate, n-butyl methacrylate, isobutyl methacrylate, tert-butyl methacrylate, and cyclohexyl methacrylate.

Suitable vinyl aromatic compounds for use herein include vinyl toluene, alpha- and para-methylstyrene, alpha-butylstyrene, 4-n-butylstyrene, and most preferably styrene.

Suitable vinyl esters for use herein include vinyl esters of branched and unbranched carboxylic acids having one to eighteen carbon atoms, such as vinyl formate, vinyl acetate, vinyl propionate, vinyl isobutyrate, vinyl valerate, vinyl pivalate, vinyl 2-ethylhexanoate, vinyl decanoate, isopropenyl acetate, and vinyl esters of Versatic® acids.

In some embodiments, the main monomers employed herein comprise (i) one or more $C_1$-$C_{18}$ alkyl esters of acrylic and/or methacrylic acid and (ii) styrene, where the styrene is present in an amount up to 10 pphm, such as 2 to 10 pphm.

In some embodiments, the main monomers used herein comprise (i) at least one monomer, and in some cases at least two monomers, whose homopolymer has a glass transition temperature ($T_g$) of greater than or equal to 25°C and (ii) at least one monomer, and in some cases at least two monomers, whose homopolymer has a glass transition temperature ($T_g$) of less than 25°C. The $T_g$ values for the homopolymers of the majority of monomers are known and are listed for example in Ullmann's Encyclopedia of Industrial Chemistry, volume A21, page 169, 5th edition, VCH Weinheim, 1992. $T_g$ values for copolymers can then be calculated using the Fox equation, $1/T_g = w_1/T_{g,1} + w_2/T_{g,2} + ... + w_n/T_{g,n}$, where $w_1$, $w_2$, ..., $w_n$ are the weight fractions of monomers 1, 2, ..., n, and $T_{g,1}$, $T_{g2}$, ..., $T_{g,n}$ are the glass transition temperatures of their respective homopolymers (in Kelvin). In some embodiments, the copolymers produced herein have a calculated $T_g$ value from -10 to 40 °C, preferably from 0 to 30 °C.

In addition to the main monomers listed above, the monomer composition employed to produce the polymer dispersion employed in the present coating composition may include up to 10 pphm, such as from 0.5 to 5 pphm, of one or more acid monomers comprising at least one of an ethylenically unsaturated carboxylic acid or an anhydride or amide thereof, an ethylenically unsaturated sulfonic acid, or an ethylenically unsaturated phosphonic or phosphoric acid.

For example, the acid monomer may comprise an ethylenically unsaturated $C_3$-$C_8$ monocarboxylic acid and/or an ethylenically unsaturated $C_4$-$C_8$ dicarboxylic acid, together with the anhydrides or amides thereof. Examples of suitable ethylenically unsaturated $C_3$-$C_8$ monocarboxylic acids include acrylic acid, methacrylic acid and crotonic acid. Examples of suitable ethylenically unsaturated $C_4$-$C_8$ dicarboxylic acids include maleic acid, fumaric acid, itaconic acid and citraconic acid.

Examples of suitable ethylenically unsaturated sulfonic acids include those having 2-8 carbon atoms, such as vinylsulfonic acid, 2-acrylamido-2-methylpropanesulfonic acid, 2-acryloyloxyethanesulfonic acid and 2-methacryloyloxyethanesulfonic acid, 2-acryloyloxy- and 3-methacryloyloxypropanesulfonic acid. Examples of suitable ethylenically unsaturated phosphonic or phosphoric acids include vinylphosphonic acid, esters of phosphonic or phosphoric acid with hydroxyalkyl(meth)acrylates and ethylenically unsaturated polyethoxyalkyletherphosphates.

In addition to or instead of said acids, it is also possible to use the salts thereof, preferably the alkali metal or ammonium salts thereof, particularly preferably the sodium salts thereof, such as, for example, the sodium salts of vinylsulfonic acid and of 2-acrylamidopropanesulfonic acid.

Additionally or alternatively, the monomer composition employed to produce the polymer dispersion employed herein may include up to 10 pphm, such as from 0.5 to 5 pphm, of one or more functional co-monomers adapted to promote better film or coating performance by the final coating composition. Such desirable film/coating properties can include, for example, enhanced adhesion to surfaces or substrates, improved wet adhesion, better resistance to removal by scrubbing or other types of weathering or abrasion, and improved resistance to film or coating cracking. The optional co-monomers useful for incorporation into the emulsion copolymers of the compositions herein are those which contain one polymerizable double bond along with one or more additional functional moieties. Such optional or auxiliary co-monomers can include unsaturated silane co-monomers, glycidyl co-monomers, ureido co-monomers, carbonyl-functional monomers and combinations of these auxiliary optional co-monomers.

Unsaturated silanes useful as optional co-monomers can generally correspond to a substituted silane of the structural Formula I:

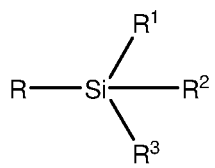

Formula I

in which R denotes an organic radical olefinically unsaturated in the ω-position and $R^1$ $R^2$ and $R^3$ which may be identical or different, denote the group -OZ, Z denoting hydrogen or primary or secondary alkyl or acyl radicals optionally substituted by alkoxy groups. Suitable unsaturated silane compounds of Formula I are preferably those in which the radical R in the formula represents an ω-unsaturated alkenyl of 2 to 10 carbon atoms, particularly of 2 to 4 carbon atoms, or an ω-unsaturated carboxylic acid ester formed from unsaturated carboxylic acids of up to 4 carbon atoms and alcohols of up to 6 carbon atoms carrying the Si group. Suitable radicals $R^1$, $R^2$, $R^3$ are preferably the group -OZ, Z representing primary and/or secondary alkyl radicals of up to 10 carbon atoms, preferably up to 4 carbon atoms, or alkyl radicals substituted by alkoxy groups, preferably of up to 3 carbon atoms, or acyl radicals of up to 6 carbon atoms, preferably of up to 3 carbon atoms, or hydrogen. Most preferred unsaturated silane co-monomers are vinyl trialkoxy silanes.

Examples of preferred silane compounds of the Formula I include γ-methacryloxypropyltris(2-methoxyethoxy)silane, vinyltrimethoxysilane, vinyltriethoxysilane, vinyldiethoxysilanol, vinylethoxysilanediol, allyltriethoxysilane, vinyltripropoxysilane, vinyltriisopropoxysilane, vinyltributoxysilane, vinyltriacetoxysilane, trimethylglycolvinylsilane, γ-metbacryloxypropyltrimetbylglycolsilane, γ-acryloxypropyltriethoxysilane and γ-methacryloxypropyltrimethoxysilane.

Glycidyl compounds can also be used as optional functional co-monomers to impart epoxy-functionality to the emulsion copolymer. Examples of suitable glycidyl optional co-monomers include glycidyl acrylate, glycidyl methacrylate, allyl glycidyl ether, and vinyl glycidyl ether.

Another type of functional co-monomer comprises cyclic ureido co-monomers. Cyclic ureido co-monomers are known to impart improved wet adhesion properties to films and coatings formed from copolymers containing these co-monomers. Cyclic ureido compounds and their use as wet adhesion promoting co-monomers are disclosed in U.S. Patent Nos. 4,104,220; 4,111,877; 4,219,454; 4,319,032; 4,599,417 and 5,208,285. The disclosures of all of these U.S. patents are incorporated herein by reference in their entirety.

Other suitable functional co-monomers include unsaturated compounds that contain one or more carbonyl moieties. Examples of such suitable co-monomers include diacetone acrylamide (DAAM), polymerizable 1,3-dicarbonyl compounds and polymerizable 1,3-diketoamides. Suitable polymerizable 1,3-dicarbonyl compounds include acetoacetoxyethyl acrylate, acetoacetoxyethyl methacrylate (AAEM), acetoacetoxypropyl methacrylate, acetoacetoxybutyl methacrylate, 2,3-di(acetoacetoxy)propyl methacrylate and allyl acetoacetate. Such monomers are known to impart improved wet adhesion properties to coating compositions, especially on alkyd substrates (See DE 2535372 A1). Suitable polymerizable 1,3-diketoamides include those compounds described in U.S. Patent No. 5,889,098, which patent is incorporated herein by reference. Examples of compounds of this type include amido acetoacetonates such as 3-isopropenyl-α,α-dimethylbenzyl amidoacetoacetate, 4-isopropenyl-α,α-dimethylbenzyl amidoacetoacetate, 4-ethylenyl-phenyl amidoacetoacetate and the like.

Optionally, the monomer compositions used in the present process may also contain up to 3 pphm, such as from 0.1 to 2 pphm, of monomers with at least two non-conjugated ethylenically unsaturated groups. Such cross-linking co-monomers include triallyl cyanurate, triallyl isocyanurate, diallyl maleate, diallyl fumarate, divinyl benzene, diallyl phthalate, hexanediol diacrylate, ethyleneglycol dimethacrylate, and polyethylene glycol diacrylate.

The desired polymer dispersion is produced by free radical emulsion polymerization of the monomers described above in an aqueous medium and in the presence of one or more free radical initiators. The polymerization can be conducted either in a single stage or in multiple stages. The polymer produced in each stage may have a constant or a varying $T_g$. Preferably, the polymerization is conducted such that a dispersion with one defined $T_g$ is obtained. Suitable free radical initiators include hydrogen peroxide, benzoyl peroxide, cyclohexanone peroxide, isopropyl cumyl hydroperoxide, persulfates of potassium, of sodium and of ammonium, peroxides of saturated monobasic aliphatic carboxylic acids having an even number of carbon atoms and a $C_8$-$C_{12}$ chain length, tert-butyl hydroperoxide, di-tert-butyl peroxide, diisopropyl percarbonate, azoisobutyronitrile, acetylcyclohexanesulfonyl peroxide, tert-butyl perbenzoate, tert-butyl peroctanoate, bis(3,5,5-trimethyl)hexanoyl peroxide, tert-butyl perpivalate, hydroperoxypinane, p-methane hydroperoxide. The abovementioned compounds can also be used within redox systems, using transition metal salts, such as iron(II) salts, or other reducing agents. Alkali metal salts of oxymethanesulfinic acid, hydroxylamine salts, sodium dialkyldithiocarbamate, sodium bisulfite, ammonium bisulfite, sodium dithionite, diisopropyl xanthogen disulfide, ascorbic acid, tartaric acid, and isoascorbic acid can also be used as reducing agents.

The conditions in the or each polymerization stage generally include a temperature between from 40 to 120°C, preferably from 50 to 110°C, and most preferably from 60 to 95°C. Irrespective of whether the polymerization is conducted in one or two or more stages, the polymerization conditions are arranged so that the polymer produced in at least one polymerization stage produced by emulsion polymerization of at least one ethylenically unsaturated monomer in the presence of one or more chain transfer agents has, when polymerized and analyzed alone, a Fikentscher K value less than 60, preferably less than 55, most preferably less than 50. In the case of a multistage polymerization or gradient feed polymerization or power feed polymerization (the latter two yielding polymers with gradually changing compositions), the polymer fractions with a Fikentscher K value less than 60 may comprise at least 30%, preferably at least 50% of the polymer mixture.

The desired low molecular weight polymer is achieved by including from 0.02 to 3 pphm, such as from 0.05 to 1 pphm, of a chain transfer agent in the monomer mixture. According to IUPAC, chain transfer agents are substances able to react with a chain carrier by a reaction, in which the original chain carrier is deactivated and a new chain carrier is generated (Pure Appl. Chem., Vol. 82, No. 2, pp. 483-491, 2010). Important classes of chain transfer agents are listed in the Handbook of Radical Polymerization, K. Matyjaszewski, T.P. Davis, Wiley-Interscience, 2003. Preferred chain transfer agents are mercaptans with one or multiple thiol groups such as methylthiol, ethylthiol, n-propylthiol, n-butylthiol, n-hexylthiol, n-octylthiol, n-decylthiol, n-dodecylthiol, n-tetradecylthiol, n-hexadecylthiol, n-octadecylthiol, cyclohexylthiol, isopropylthiol, tert-butylthiol, tert-nonylthiol, tert-dodecylthiol, 4-methylbenzene thiol, 2-mercaptopropionic acid, isooctyl 3-mercaptopropionate, 4,4' -thiobisbenzenethiol, pentaerythritol tetrakis(2-mercaptoacetate) and pentaerythritol tetrakis(3-mercaptopropionate).

The present emulsion polymerization process is carried out in the presence of a stabilization system which

comprises one or more stabilizers selected from protective colloids, anionic and/or non-ionic surfactants and mixtures thereof. Generally, the stabilizer(s) are present in the aqueous polymerization mixture in an amount between 0.5 and 15% by weight based on the total weight of monomer(s) in the mixture. Surfactant stabilizers are preferred.

Suitable nonionic surfactants which can be used as stabilizers in the present process include polyoxyethylene condensates, although it is generally preferred to minimize the use of ethoxylated nonionics based on alkylphenols (APEs). For purposes of this invention, dispersions and coating compositions are considered to be substantially free of APEs if they contain less than 500 ppm of alkylphenol ethoxylates. Exemplary polyoxyethylene condensates that can be used include polyoxyethylene aliphatic ethers, such as polyoxyethylene lauryl ether and polyoxyethylene oleyl ether; polyoxyethylene alkaryl ethers, such as polyoxyethylene nonylphenol ether and polyoxyethylene octylphenol ether; polyoxyethylene esters of higher fatty acids, such as polyoxyethylene laurate and polyoxyethylene oleate, as well as condensates of ethylene oxide with resin acids and tall oil acids; polyoxyethylene amide and amine condensates such as N-polyoxyethylene lauramide, and N-lauryl-N-polyoxyethylene amine and the like; and polyoxyethylene thio-ethers such as polyoxyethylene n-dodecyl thio-ether.

Nonionic surfactants that can be used also include a series of surface active agents available from BASF under the Pluronic™ and Tetronic™ trade names. Pluronic surfactants are ethylene oxide (EO)/Propylene oxide (PO)/ethylene oxide block copolymers that are prepared by the controlled addition of PO to the two hydroxyl groups of propylene glycol. EO is then added to sandwich this hydrophobe between two hydrophilic groups, controlled by length to constitute from 10% to 80% (w/w) of the final molecule. PO/EO/PO block copolymers also available under the trade name Pluronic and are prepared by adding EO to ethylene glycol to provide a hydrophile of designated molecular weight. PO is then added to obtain hydrophobic blocks on the outside of the molecule. Tetronic surfactants are tetrafunctional block copolymers derived from the sequential addition of PO and EO to ethylene-diamine. Tetronic surfactants are produced by the sequential addition of EO and PO to ethylene-diamine. In addition, a series of ethylene oxide adducts of acetyleneic glycols, sold commercially by Air Products under the Surfynol™ trade name, are suitable as nonionic surfactants. Additional examples of nonionic surfactants include Disponil™ A 3065 (alcohol ethoxylate), Emulsogen™ EPN 407 (alkyl polyglycol ether with 40 EO), and Emulsogen™ EPN 287 (alkyl polyglycol ether with 28 EO).

Suitable anionic surfactants comprise alkyl-, aryl- or alkylaryl-sulfonates and alkyl, aryl or alkylaryl sulfates, phosphates or phosphonates, whereby it also is possible for oligo- or polyethylene oxide units to be located between the hydrocarbon radical and the anionic group. The polymer dispersion may be stabilized by a combination of nonionic and anionic surfactants. Preferably, the dispersion is stabilized by anionic surfactants alone. Typical examples of anionic surfactants include sodium lauryl sulfate, sodium undecylglycol ether sulfate, sodium octylphenol glycol ether sulfate, sodium dodecylbenzene sulfonate, sodium lauryl ether sulfate, and ammonium tri-tert-butylphenol -glycol ether sulfate. Preferred anionic surfactants are those not comprising APE-structural units.

Also suitable as stabilizers for the present dispersions are copolymerizable nonionic and anionic surfactants such as those disclosed in US 2014/0243552. Other suitable copolymerizable surfactants are sold under the trade names Hitenol BC, Hitenol KH, Adeka Reasoap SR, and Adeka Reasoap ER.

Conventionally, various protective colloids such as carboxymethyl cellulose (CMC), hydroxyethyl cellulose (HEC) and other conventional protective colloid-forming materials have also been used to stabilize polymer latex compositions of the types hereinbefore described, instead of or in addition to the surfactant emulsifiers. In one embodiment, the dispersions and compositions herein can contain up to about 5 wt% of protective colloid stabilizing agents, based on the total amount of copolymers in the dispersions or compositions being stabilized.

In another embodiment, the dispersions and compositions herein can be substantially free of such protective colloids as stabilizing agents. Such dispersions are considered to be "substantially free" of protective colloids if protective colloids comprise no more than 0.5 wt% of the dispersions, based on the total amount of copolymers in the dispersions being stabilized.

On completion of the polymerization, a further, preferably chemical after-treatment, especially with redox catalysts, for example combinations of the above-mentioned oxidizing agents and reducing agents, may follow to reduce the level of residual unreacted monomer on the product. In addition, residual monomer can be removed in known manner, for example by physical demonomerization, i.e. distillative removal, especially by means of steam distillation, or by stripping with an inert gas. A particularly efficient combination uses both physical and chemical methods, which permits lowering of the residual monomers to very low contents (<1000 ppm, preferably <100 ppm).

The polymerized particles produced by the present process typically have a weight-averaged diameter of less than 200 nm, preferably less than 150 nm, as measured by a combination of laser diffraction and polarization intensity differential scattering (PIDS) using a Beckman Coulter LS 13320 Particle Size Analyzer.

In addition to monomers described herein, the final polymers may also contain a water-soluble cross-linking agent. Such a cross-linking agent will react with specific polymer functionalities such as carbonyl or 1,3-dicarbonyl groups as water is removed from the coating compositions herein and as a film or coating is formed from the polymerized components.

A type of water-soluble cross-linking agent that can be used in the compositions herein comprises a compound

which contains at least two hydrazine and/or hydrazide moieties. Particularly suitable are dihydrazine compounds of aliphatic dicarboxylic acids of 2 to 10, in particular 4 to 6, carbon atoms, e.g., oxalic acid dihydrazide, malonic acid dihydrazide, succinic acid dihydrazide, glutaric acid dihydrazide, adipic acid dihydrazide, sebacic acid dihydrazide, maleic acid dihydrazide, fumaric acid dihydrazide and/or itaconic acid dihydrazide. Water-soluble aliphatic dihydrazines of 2 to 4 carbon atoms, e.g., ethylene-1,2-dihydrazine, propylene-1,3-dihydrazine or butylene-1,4-dihydrazine, are also suitable. Adipic acid dihydrazide (ADH) is a preferred water-soluble cross-linking agent for use in the compositions herein, especially those produced from monomer compositions containing diacetone acrylamide (DAAM).

Other suitable water-soluble cross-linking agents are compounds which contain at least two amine functional moieties such as ethylene diamine and hexamethylene diamine. Such cross-linking agents are preferred in combination with polymers comprising 1,3-dicarbonyl groups, such as acetoacetoxyethyl methacrylate (AAEM).

Generally, such water-soluble cross-linking agents are post added to the dispersion such that the molar ratio of cross-linking agent functional groups to polymer functional groups is between about 0.1 and about 2.0. More preferably the molar ratio of cross-linking agent functional groups to copolymer functional groups in the blend will be between about 0.5 and 2.0.

After polymerization the dispersion is typically neutralized to alkaline pH. This can be accomplished by, for example, the addition of an organic or inorganic base, such as an amine, ammonia or an alkali metal hydroxide, such as potassium hydroxide. In some embodiments, it is preferred to effect neutralization with a nitrogen-free base.

The aqueous polymer dispersions produced by the process of the invention generally have a solid content of from 30 to 70% by weight, preferably from 40 to 55% by weight. In some embodiments, it may be desirable to prepare water-redispersible polymer powders from the polymer dispersions prior to their ultimate use as a coating composition. This is conveniently achieved by drying the aqueous dispersions, following the optional addition of protective colloids as a spraying aid, for example by means of fluidized bed drying, freeze drying, or spray drying. Preferably, the dispersions are spray-dried. Spray drying takes place in standard spray-drying units, in which atomization may take place by means of one-fluid, two-fluid or multifluid nozzles, or with a rotating disk. The chosen exit temperature is generally in the range from 45°C to 120°C, preferably from 60°C to 90°C, depending on the unit, on the $T_g$ of the resin, and on the desired degree of drying.

## Organic Pigment

In addition to the polymer dispersion, the coating composition described herein includes one or more organic pigments. Any known organic pigment can be used, but examples of suitable organic pigments include sepia, gamboge, Cassel brown, toluidine red, Para red, Hansa yellow, and pigment classes based on anthanthrone (e.g., C.I. Pigment red 168), azo (e.g., C.I. Pigment Yellow 74, C.I. Pigment Red 112, C.I. Pigment Red 101, and C.I. Pigment Orange 36), diketopyrrolopyrrole (e.g., C.I. Pigment Red 254), dioxazine (e.g., C.I. Pigment Violet 23), indanthrone, indigo, isoindoline, isoindolinone, perinone (e.g., C.I. Pigment Orange 43), phthalocyanine (e.g., C.I. Pigment Green 7 and C.I. Pigment Blue 15), quinacridone, benzimidazolone (e.g., C.I. Pigment Yellow 154) and quinophthalone. Typically, the present coating composition comprises from 0.1 to 7 wt%, such as from 0.2 to 5 wt%, organic pigment.

The inventive polymer dispersions are particularly suited to prevent color fading of coatings containing cost-effective but light-sensitive pigments such as those pigments based on the azo or diketopyrrolopyrrole classes.

In some embodiments, the present coating composition includes an inorganic pigment in addition to the organic pigment. Examples of suitable inorganic pigments include inorganic white pigments such as titanium dioxide, preferably in the rutile form, barium sulfate, zinc oxide, zinc sulfide, basic lead carbonate, antimony trioxide, and lithopone (zinc sulfide + barium sulfate), as well as colored inorganic pigments, such as iron oxides, carbon black, graphite, zinc yellow, zinc green, ultramarine, manganese black, antimony black, manganese violet, Paris blue and Schweinfurter green. The inorganic pigments may be present in an amount from 0 to 25 wt% of the coating composition.

## Inorganic Filler

In addition to the polymer dispersion and organic pigment, the coating composition described herein includes one or more inorganic fillers. Suitable inorganic fillers include, for example, aluminosilicates, such as feldspars, silicates, such as kaolin, talc, mica, magnesite, alkaline earth carbonates, such as calcium carbonate, in the form for example as calcite or chalk, magnesium carbonate, dolomite, alkaline earth metal sulfates, such as calcium sulfate, silicon dioxide, etc. In paints, finely divided fillers are preferred, that is having an average particle size from 2 to 10 μm, whereas for plasters and renders coarser fillers with an average particle size from 10 μm to 3 mm are employed.

The fillers may be used as individual components. Mixtures of fillers such as, for example, calcium carbonate/kaolin and calcium carbonate/kaolin/talc have also been found to be particularly useful in practice. To increase the hiding power of the coating and to save on titanium dioxide, finely divided fillers such as, for example, finely divided calcium carbonate and mixtures of various calcium carbonates with different particle size distribution are frequently used.

Calcined clays are commonly used to increase film dry opacity as they help incorporate air voids into the dry film. Air voids create a big difference in refractive index in the film and scatter light, yielding more opacity in the film once cured. To adjust the hiding power, the shade and the depth of color of the coatings formed, the fillers are mixed with appropriate amounts of white pigment and inorganic and/or organic colored pigments.

In some embodiments, the present coating composition has a pigment volume concentration (PVC), namely the volume of pigments and fillers compared to the volume of pigments, fillers and polymers, from 30 to 65 %, such as from 40 to 60 %.

## Hindered Amine Light Stabilizer

In some embodiments, the coating composition described herein also includes at least one hindered amine light stabilizer, or HALS component, in addition to the polymer dispersion, organic pigment and inorganic filler. Suitable HALS components include N-substituted polyalkylpiperidines and N-substituted polyalkylpiperazinone derivatives, preferably secondary or tertiary N-substituted polyalkylpiperidine or secondary or tertiary N-substituted polyalkylpiperazinones. Specific examples include 2,2,6,6-tetramethylpiperidine derivatives and 1,2,2,6,6-pentamethylpiperidine derivatives, such as 4-(meth)acryloyloxy-2,2,6,6-tetramethylpiperidine, 4-(meth)acryloylamino-2,2,6,6-tetramethylpiperidine, 4-(meth)acryloyloxy-1,2,2,6,6-pentamethylpiperidine, and 4-(meth)acryloyl-amino-1,2,2,6,6-pentamethylpiperidine. These may be used each alone or in combination, and amount of the component is preferably 0.01 to 5% by weight, such as 0.1 to 3% by weight, based on the polymerizable monomer components. Preferably, Tinuvin® 123, Tinuvin® 292, and Tinuvin® 249 from BASF are used.

Although HALS components are known to be effective stabilizers for clear lacquers and unpigmented systems in general, it has now surprisingly been found that they significantly improve the color retention of pigmented coating compositions.

## Auxiliary Components

The coating composition described herein may also include any of the conventional auxiliaries used in paints and plasters in addition to the components described above. For example, to assist in dispersing the pigments and fillers in the aqueous phase, auxiliaries based on anionic or non-ionic wetting agents, such as, for example, sodium pyrophosphate, sodium polyphosphate, naphthalenesulfonate, sodium polyacrylate, sodium polymaleinates and polyphosphonates such as sodium 1-hydroxyethane-1,1-diphosphonate and sodium nitrilotris(methylenephosphonate), may be added.

Thickeners may also be added to the paint formulations herein. Thickeners which may be used include, *inter alia,* sodium polyacrylate and water-soluble copolymers based on acrylic and methacrylic acid, such as acrylic acid/acrylamide and methacrylic acid/acrylic ester copolymers. Hydrophobically-modified alkali soluble (acrylic) emulsions (HASE), hydrophobically-modified ethoxylate (poly)urethanes (HEUR), hydrophobically-modified ethoxylate (poly)urethane alkali-swellable/soluble emulsions (HEURASE), polyether polyols (PEPO), and polyurea thickeners are also available. Inorganic thickeners, such as, for example, bentonite or hectorite, may also be used.

For various applications, it is sometimes also desirable to include small amounts of other additives, such as biocides, pH modifiers, and antifoamers, incorporated in the coating compositions herein. This may be done in a conventional manner and at any convenient point in the preparation of the compositions.

The coating compositions described herein may be used as architectural or façade paints or as plasters and renders for coating the exterior of walls of buildings.

When used in a façade paint or a plaster or render, the present coating compositions exhibit ease of handling, excellent processing properties and enhanced color retention.

The invention will now be more particularly described with reference to the following non-limiting Examples.

In the Examples, the Fikentscher K value of each polymer are determined as follows: Approximately 2.1 g of the polymer dispersion are exactly weighted into a 100 mL volumetric flask, which is then filled up with N-methyl-2-pyrrolidone to yield 100 mL polymer solution. The concentration of the solid polymer in g/100 mL is calculated by multiplying the weighted mass of the polymer dispersion with its solid content. To obtain the solvent reference, 1 g deionized water is weighted into a 100 ml volumetric flask, which is then filled up to 100 mL with N-methyl-2-pyrrolidone. Both polymer solution and solvent reference are then filtered over a sieve with 0.3 mm mesh size.

The relative viscosity $\eta_r$ is determined with the capillary viscosimeter AVS 400 (Schott). Exactly 2 mL of the polymer solution or reference solvent are filled into the capillary viscosimeter and the retention times t (polymer solution) and $t_0$ (reference solvent) are determined (3 measurements each). The capillary is chosen such that the retention time of the reference solvent is higher than 40 s. The relative viscosity is calculated by dividing t by $t_0$ and the K value is obtained by solving equation (I).

**Example 1 (Comparative)**

A 3 liter reactor equipped with a reflux condenser and an anchor stirrer was filled with 600 g of deionized (DI) water and 19.6 g of a 28% aqueous solution of a sodium alkyl ether sulfate. The reactor content was heated to 80°C and 2.6% of a monomer feed, as described in Table 1, was added. A solution of 0.5 g ammonium persulfate in 6 g of water was added and the reactor contents were held at 80°C for 15 minutes. Subsequently, the remaining amount of monomer feed was added to the reactor with constant dosage rate over 180 minutes. The reactor temperature during the feed addition was maintained at 80°C. After completion of the feed addition, the reactor content was held at 80°C for another 60 minutes and then cooled to room temperature. 40.4 g of aqueous ammonium hydroxide solution (12.5%) were added to the dispersion 30 minutes after the completion of the feed addition. A defoamer solution (0.3 g Tego Foamex 805 in 20 g DI water) and biocide solutions (2.4 g Acticide MBS 50:50 and 9.4 g Mergal K10N in 30 g DI water each) were added at room temperature.

The properties of the resulting polymer dispersion are summarized in Table 2.

**Examples 2 to 4 (Inventive)**

The process of Example 1 was repeated with varying monomer feed compositions, as described in Table 1. Again, the properties of the resulting polymer dispersions are summarized in Table 2.

**Table 1:** Composition of the monomer feeds (in grams)

| | Ex. 1 | Ex. 2 | Ex.3 | Ex. 4 |
|---|---|---|---|---|
| DI water | 510 | 510 | 510 | 510 |
| Sodium alkyl ether sulfate, 28% in water | 39 | 39 | 39 | 39 |
| Ammonium persulfate | 5 | 5 | 5 | 5 |
| Methacrylic acid (MAA) | 22 | 22 | 22 | 22 |
| Acrylic acid (AA) | 11 | 11 | 11 | 11 |
| Methyl methacrylate (MMA) | 605 | 605 | 539 | 517 |
| Styrene | 0 | 0 | 55 | 55 |
| 2-Ethylhexyl acrylate (EHA) | 495 | 495 | 0 | 264 |
| n-Butyl acrylate (BA) | 0 | 0 | 506 | 264 |
| n-Dodecyl mercaptane (NDM) | 0 | 11 | 11 | 11 |

**Table 2:** Properties of the polymer dispersions

| | Solid content (%)[1] | Brookfield viscosity (mPa s)[2] | pH | $d_w$ (nm)[3] | (°C)[4] | K value |
|---|---|---|---|---|---|---|
| Example 1 | 47.1 | 640 | 8.5 | 120 | 22.4 | 71.9 |
| Example 2 | 47.1 | 584 | 8.5 | 120 | 16.6 | 29.2 |
| Example 3 | 47.1 | 3050 | 9.0 | 100 | 21.0 | 29.7 |
| Example 4 | 47.0 | 3250 | 8.7 | 100 | 14.5 | 32.0 |

[1] gravimetric determination after 24 h drying at 110°C
[2] measurement conditions: 20°C, 20 rpm, spindle 2 (ex. 1+2) / spindle 4 (ex. 3+4)
[3] weight-average particle diameter as determined by a Beckman Coulter LS 13320 Particle Size Analyzer
[4] Glass transition temperature as measured by differential scanning calorimetry (DSC) according to ISO 16805

**Examples 5-16 (Inventive and comparative façade paints)**

Façade mill bases were prepared by mixing the ingredients in Table 3 at room temperature under stirring.

**Table 3:** Façade mill base

| | Parts per weight |
|---|---|
| Water | 162 |
| Sodium hydroxide (10%) | 1.5 |
| Tylose H 30000 YP2 | 2 |
| Agitan 281 | 3 |
| Lopon 890 | 3 |
| Calgon N (10%) | 10 |
| Titanium dioxide (Kronos 2160) | 100 |
| Omyacarb 5 GU | 100 |
| Omyacarb 15 GU | 200 |
| Omyacarb 40 GU | 75 |
| Polwhite B | 50 |
| MicaCelia 125 L | 50 |
| Butyldiglycol acetate | 12 |
| Tego Phobe 1401 | 10 |
| Tafigel PUR 40 | 3 |
| | 781.5 |

The colored façade paints were then prepared by mixing the mill base with polymer dispersions (Ex. 1-4), organic pigments, and optionally hindered amine light stabilizer (HALS), according to Table 4.

The façade paints were colored red by mixing organic pigment pastes into the paints. In one embodiment, 1.0 wt% Colanyl Red D3GD 500 (Clariant, Red 254, CAS: 84632-63-5) based on diketopyrrolopyrrole (DPP) was used. In a second embodiment, 1.0 wt% Colanyl Red FGR 530 (Clariant), based on the azo pigment Red 112, CAS: 6535-46-2, was added as coloring component.

Acticide MKB 3 was added as film preservative to protect the facade paints from surface fungal and algal growth.

The resulting coating compositions had a solid content of approx. 67% and a pigment volume concentration (p.v.c.) of approx. 57%.

**Table 4:** Overview of façade paints and their compositions

| | Ex.5 | Ex. 6 | Ex. 7 | Ex. 8 | Ex. 9 | Ex. 10 |
|---|---|---|---|---|---|---|
| Dispersion Ex. 1 | 372.4 | - | - | - | - | - |
| Dispersion Ex. 2 | - | 372.4 | - | - | - | - |
| Dispersion Ex. 3 | - | - | 372.4 | 372.4 | - | - |
| Dispersion Ex. 4 | - | - | - | - | 372.4 | 372.4 |
| Tinuvin 123 | - | - | - | 0.93 | - | 0.93 |
| Façade mill base | 781.5 | 781.5 | 781.5 | 781.5 | 781.5 | 781.5 |
| Colanyl Red D3GD 500 (Red 254) | 11.6 | 11.6 | 11.6 | 11.6 | 11.6 | 11.6 |
| Colanyl Red FGR 530 (Red 112) | - | - | - | - | - | - |
| Acticide MKB 3 | 10 | 10 | 10 | 10 | 10 | 10 |
| | | | | | | |
| | Ex. 11 | Ex. 12 | Ex. 13 | Ex. 14 | Ex. 15 | Ex. 16 |
| Dispersion Ex. 1 | 372.4 | - | - | - | - | - |

(continued)

| | Ex. 11 | Ex. 12 | Ex. 13 | Ex. 14 | Ex. 15 | Ex. 16 |
|---|---|---|---|---|---|---|
| Dispersion Ex. 2 | - | 372.4 | - | - | - | - |
| Dispersion Ex. 3 | - | - | 372.4 | 372.4 | - | - |
| Dispersion Ex. 4 | - | - | - | - | 372.4 | 372.4 |
| Tinuvin 123 | - | - | - | 0.93 | - | 0.93 |
| Façade mill base | 781.5 | 781.5 | 781.5 | 781.5 | 781.5 | 781.5 |
| Colanyl Red D3GD 500 (Red 254) | - | - | - | - | - | - |
| Colanyl Red FGR 530 (Red 112) | 11.6 | 11.6 | 11.6 | 11.6 | 11.6 | 11.6 |
| Acticide MKB 3 | 10 | 10 | 10 | 10 | 10 | 10 |

The colored façade paints were then applied on pretreated cement asbestos plates (Eternit®). The pretreatment comprises watering to remove calcium salts from the plates (3 times for 3 days), and applications of a fluate (Fassaden-Perfekt-Konzentrat from Hornbach) and a primer coating (Mowilith® LDM 7667). The colored paints were applied two times to yield a film thickness of the dried paint of approx. 100 μm.

The coated plates were subjected to outdoor weathering. They were mounted into metal supports at an angle of 45° and facing southbound. Before outdoor exposure, the initial color of the coated plates was measured in the framework of the CIELab color space. The CIELab color space defines every color as a three coordinate point {L,a,b}, where L represents the black-white axis, a the red-green axis, and b the blue-yellow axis. The color difference after outdoor exposure for one year could then be quantified by the value ΔE, which is the Euklidic difference between the initial {L,a,b}, and the exposed $\{L,a,b\}_e$ color points:

$$\Delta E = \sqrt{(L_e - L_i)^2 + (a_e - a_i)^2 + (b_e - b_i)^2}.$$

The smaller ΔE, the better is the color stability of the respective system.

The color stability largely depends on the chemical nature of the pigment. E.g., the UV stability of the chromophoric unit of Red 254 is higher than that of Red 112. However, the formulation and in particular the polymeric binder also significantly influence the color stability of a paint. For a given pigment and a given formulation, large variations in ΔE are caused by the polymeric binder, as can be inferred from Tables 5 and 6. For Red 254, ΔE values are rated as follows (45° south, 1 year exposure): <8 (good), ≥8 (poor). For Red 112, ΔE values <16 are rated good, values ≥16 are rated poor.

**Table 5:** Color stability of façade paints with Red 254

| Façade paint | Ex. 5 | Ex. 6 | Ex. 7 | Ex. 8 | Ex. 9 | Ex. 10 |
|---|---|---|---|---|---|---|
| comp. / inv. | comp. | inv. | inv. | inv. | inv. | inv. |
| ΔE (after 1 year) | 9.2 | 7.5 | 7.4 | 7.1 | 7.8 | 7.1 |
| color stability | poor | good | good | good | good | good |

**Table 6:** Color stability of façade paints with Red 112

| Façade paint | Ex. 11 | Ex. 12 | Ex. 13 | Ex. 14 | Ex. 15 | Ex. 16 |
|---|---|---|---|---|---|---|
| comp. / inv. | comp. | inv. | inv. | inv. | inv. | inv. |
| ΔE (after 1 year) | 19.3 | 14.9 | 13.8 | 13.6 | 14.9 | 14.3 |
| color stability | poor | good | good | good | good | good |

It can be seen that the façade paints employing the polymeric binders produced in the presence of a chain

transfer agent universally exhibit improved color stability as compared with the paints comprising the polymeric binder produced without a chain transfer agent.

## Claims

1. An exterior wall coating composition comprising:

   (a) an aqueous polymer dispersion formed by emulsion polymerization of at least one ethylenically unsaturated monomer in the presence of a chain transfer agent, wherein the polymer has a Fikentscher K value less than 60;
   (b) at least one organic pigment; and
   (c) at least one inorganic filler,

   wherein for measurement of the Fikentscher K value, N-methyl-2-pyrrolidone is used as a solvent and the viscosity measurement is conducted at 20 °C as determined by the method disclosed in the description.

2. The composition of claim 1, wherein the polymer has a Fikentscher K value less than 55, preferably less than 50.

3. The composition of claim 1 or claim 2, wherein the polymer comprises more than 50 pphm of monomer units based on $C_1$-$C_{18}$ alkyl esters of ethylenically unsaturated carboxylic acids, preferably acrylic acid and/or methacrylic acid; wherein the polymer preferably further comprises 2 to 10 pphm of styrene units.

4. The composition of claim 3, wherein the polymer comprises units of at least one monomer whose homopolymer has a glass transition temperature less than 25°C.

5. The composition of claim 3 or 4, wherein the polymer comprises units based on n-butyl acrylate.

6. The composition of any one of claims 3 to 5, wherein the polymer comprises units based on n-butyl acrylate and 2-ethylhexyl acrylate.

7. The composition of any one of the preceding claims, wherein the polymer has a calculated $T_g$ value from -10 to 40 °C, preferably from 0 to 30 °C, wherein the $T_g$ value is calculated according to the Fox equation.

8. An exterior wall coating composition comprising:

   (a) an aqueous polymer dispersion formed by multi-stage emulsion polymerization of at least one ethylenically unsaturated monomer, wherein the polymer in at least one polymerization stage is produced in the presence of a chain transfer agent and has, when polymerized and analyzed alone, a Fikentscher K value less than 60, preferably less than 55, most preferably less than 50 and wherein the polymer(s) with a Fikentscher K value less than 60 comprises at least 30%, preferably at least 50% by weight of the total polymers in the dispersion;
   (b) at least one organic pigment; and
   (c) at least one inorganic filler,

   wherein for measurement of the Fikentscher K value, N-methyl-2-pyrrolidone is used as a solvent and the viscosity measurement is conducted at 20 as determined by the method disclosed in the description.

9. The composition of claim 8, wherein the polymer with a Fikentscher K value less than 60 comprises more than 50 pphm of monomer units based on $C_1$-$C_{18}$ alkyl esters of ethylenically unsaturated carboxylic acids, preferably acrylic acid and/or methacrylic acid; wherein the polymer with a Fikentscher K value less than 60 preferably further comprises 2 to 10 pphm of styrene units.

10. The composition of claim 9, wherein the polymer with a Fikentscher K value less than 60 comprises units of at least one monomer whose homopolymer has a glass transition temperature less than 25°C, wherein the $T_g$ value is calculated according to the Fox equation.

11. The composition of claim 9 or 10, wherein the polymer with a Fikentscher K value less than 60 comprises units based on n-butyl acrylate, or wherein the polymer with a Fikentscher K value less than 60 comprises units based on n-butyl acrylate and 2-ethylhexyl acrylate.

**12.** The composition of any one of the preceding claims and comprising from 0.1 to 7 wt% of the organic pigment.

**13.** The composition of any one of the preceding claims and having a pigment volume concentration from 30 to 65%, preferably from 40 to 60%, and/or further comprises from 0 to 25% by weight of at least one inorganic pigment.

**14.** The composition of any preceding claim and further comprising from 0.01 to 3 pphm, preferably 0.03 to 1 pphm, of at least one hindered amine light stabilizer (HALS).

**15.** Use of the composition of any preceding claim in a façade paint, plaster or render.

**Patentansprüche**

**1.** Außenwand-Beschichtungszusammensetzung, umfassend:

(a) eine durch Emulsionspolymerisation von mindestens einem ethylenisch ungesättigten Monomer in Gegenwart eines Kettenübertragungsmittels gebildete wässrige Polymerdispersion, wobei das Polymer einen K-Wert nach Fikentscher von weniger als 60 aufweist;
(b) mindestens ein organisches Pigment; und
(c) mindestens einen anorganischen Füllstoff,

wobei zur Messung des Fikentscher K-Wertes N-Methyl-2-pyrrolidon als Lösungsmittel verwendet wird und die Viskositätsmessung bei 20 °C durchgeführt wird, wie bestimmt nach dem in der Beschreibung offenbarten Verfahren.

**2.** Zusammensetzung nach Anspruch 1, wobei das Polymer einen K-Wert nach Fikentscher von weniger als 55, vorzugsweise weniger als 50, aufweist.

**3.** Zusammensetzung nach Anspruch 1 oder Anspruch 2, wobei das Polymer mehr als 50 pphm Monomereinheiten auf Basis von $C_1$-$C_{18}$-Alkylestern von ethylenisch ungesättigten Carbonsäuren, vorzugsweise Acrylsäure und/oder Methacrylsäure, umfasst; wobei das Polymer vorzugsweise ferner 2 bis 10 pphm Styroleinheiten umfasst.

**4.** Zusammensetzung nach Anspruch 3, wobei das Polymer Einheiten von mindestens einem Monomer umfasst, dessen Homopolymer eine Glasübergangstemperatur von weniger als 25°C aufweist.

**5.** Zusammensetzung nach Anspruch 3 oder 4, wobei das Polymer Einheiten auf Basis von n-Butylacrylat umfasst.

**6.** Zusammensetzung nach einem der Ansprüche 3 bis 5, wobei das Polymer Einheiten auf Basis von n-Butylacrylat und 2-Ethylhexylacrylat umfasst.

**7.** Zusammensetzung nach einem der vorangehenden Ansprüche, wobei das Polymer einen berechneten $T_g$-Wert von -10 bis 40 °C, vorzugsweise von 0 bis 30 °C, aufweist, wobei der $T_g$-Wert nach der Fox-Gleichung berechnet wird.

**8.** Außenwandbeschichtungszusammensetzung, umfassend:

(a) eine durch mehrstufige Emulsionspolymerisation von mindestens einem ethylenisch ungesättigten Monomer gebildete wässrige Polymerdispersion, wobei das Polymer in mindestens einer Polymerisationsstufe in Gegenwart eines Kettenübertragungsmittels hergestellt wird und, wenn es allein polymerisiert und analysiert wird, einen K-Wert nach Fikentscher von weniger als 60, vorzugsweise weniger als 55, besonders bevorzugt weniger als 50 aufweist und wobei das (die) Polymer(e) mit einem K-Wert nach Fikentscher von weniger als 60 mindestens 30 Gew.-%, vorzugsweise mindestens 50 Gew.-% der gesamten Polymere in der Dispersion umfasst (umfassen);
(b) mindestens ein organisches Pigment; und
(c) mindestens einen anorganischen Füllstoff,

wobei zur Messung des K-Wertes nach Fikentscher N-Methyl-2-pyrrolidon als Lösungsmittel verwendet wird und die Viskositätsmessung bei 20 °C durchgeführt wird, wie durch das in der Beschreibung offenbarte Verfahren bestimmt.

**9.** Zusammensetzung nach Anspruch 8, wobei das Polymer mit einem Fikentscher-K-Wert von weniger als 60 mehr als 50 pphm Monomereinheiten auf Basis von $C_1$-$C_{18}$-Alkylestern ethylenisch ungesättigter Carbonsäuren, vorzugsweise Acrylsäure und/oder Methacrylsäure, umfasst; wobei das Polymer mit einem Fikentscher-K-Wert von weniger als 60 vorzugsweise ferner 2 bis 10 pphm Styroleinheiten umfasst.

**10.** Zusammensetzung nach Anspruch 9, wobei das Polymer mit einem K-Wert nach Fikentscher von weniger als 60 Einheiten von mindestens einem Monomer umfasst, dessen Homopolymer eine Glasübergangstemperatur von weniger als 25°C aufweist, wobei der $T_g$-Wert nach der Fox-Gleichung berechnet wird.

**11.** Zusammensetzung nach Anspruch 9 oder 10, wobei das Polymer mit einem K-Wert nach Fikentscher von weniger als 60 Einheiten auf Basis von n-Butylacrylat umfasst, oder wobei das Polymer mit einem K-Wert nach Fikentscher von weniger als 60 Einheiten auf Basis von n-Butylacrylat und 2-Ethylhexylacrylat umfasst.

**12.** Zusammensetzung nach einem der vorangehenden Ansprüche, die 0,1 bis 7 Gew.-% des organischen Pigments umfasst.

**13.** Zusammensetzung nach einem der vorangehenden Ansprüche, die eine Pigment-Volumenkonzentration von 30 bis 65 %, vorzugsweise von 40 bis 60 %, aufweist und/oder ferner 0 bis 25 Gew.-% von mindestens einem anorganischen Pigment umfasst.

**14.** Zusammensetzung nach einem der vorangehenden Ansprüche, die ferner 0,01 bis 3 pphm, vorzugsweise 0,03 bis 1 pphm, von mindestens einem gehinderten Amin-Lichtstabilisator (HALS) umfasst.

**15.** Verwendung der Zusammensetzung nach einem der vorangehenden Ansprüche in einem Fassadenanstrich, -putz oder -verputz.

## Revendications

**1.** Composition de revêtement de paroi extérieure comprenant :

(a) une dispersion aqueuse de polymère formée par polymérisation en émulsion d'au moins un monomère éthyléniquement insaturé en présence d'un agent de transfert de chaîne, dans laquelle le polymère présente une valeur de Fikentscher K inférieure à 60 ;
(b) au moins un pigment organique ; et
(c) au moins une charge inorganique,

dans laquelle pour la mesure de la valeur de Fikentscher K, de la N-méthyl-2-pyrrolidone est utilisée en tant que solvant et la mesure de la viscosité est réalisée à 20 °C tel que déterminé par la méthode divulguée dans la description.

**2.** Composition selon la revendication 1, dans laquelle le polymère présente une valeur de Fikentscher K inférieure à 55, de préférence inférieure à 50.

**3.** Composition selon la revendication 1 ou la revendication 2, dans laquelle le polymère comprend plus de 50 ppcm d'unités de monomère basées sur des esters d'alkyle en $C_1$-$C_{18}$ d'acides carboxyliques éthyléniquement insaturés, de préférence d'acide acrylique et/ou d'acide méthacrylique ; dans laquelle le polymère comprend en outre de préférence 2 à 10 ppcm d'unités de styrène.

**4.** Composition selon la revendication 3, dans laquelle le polymère comprend des unités d'au moins un monomère dont l'homopolymère présente une température de transition vitreuse inférieure à 25 °C.

**5.** Composition selon la revendication 3 ou 4, dans laquelle le polymère comprend des unités basées sur l'acrylate de n-butyle.

**6.** Composition selon l'une quelconque des revendications 3 à 5, dans laquelle le polymère comprend des unités basées sur l'acrylate de n-butyle et l'acrylate de 2-éthylhexyle.

**7.** Composition selon l'une quelconque des revendications précédentes, dans laquelle le polymère présente une valeur

$T_g$ calculée de -10 à 40 °C, de préférence de 0 à 30 °C, dans laquelle la valeur $T_g$ est calculée selon l'équation de Fox.

**8.** Composition de revêtement de paroi extérieure comprenant :

(a) une dispersion aqueuse de polymère formée par polymérisation en émulsion en plusieurs étapes d'au moins un monomère éthyléniquement insaturé, dans laquelle le polymère dans au moins une étape de polymérisation est produit en présence d'un agent de transfert de chaîne et présente, lorsqu'il est polymérisé et analysé seul, une valeur de Fikentscher K inférieure à 60, de préférence inférieure à 55, de manière préférée entre toutes inférieure à 50 et dans laquelle le(s) polymère(s) présentant une valeur de Fikentscher K inférieure à 60 comprend (comprennent) au moins 30 %, de préférence au moins 50 % en poids des polymères totaux dans la dispersion ;
(b) au moins un pigment organique ; et
(c) au moins une charge inorganique,

dans laquelle pour la mesure de la valeur de Fikentscher K, de la N-méthyl-2-pyrrolidone est utilisée en tant que solvant et la mesure de la viscosité est réalisée à 20 °C tel que déterminé par la méthode divulguée dans la description.

**9.** Composition selon la revendication 8, dans laquelle le polymère présentant une valeur de Fikentscher K inférieure à 60 comprend plus de 50 ppcm d'unités de monomère basées sur des esters d'alkyle en $C_1$-$C_{18}$ d'acides carboxyliques éthyléniquement insaturés, de préférence d'acide acrylique et/ou d'acide méthacrylique ; dans laquelle le polymère présentant une valeur de Fikentscher K inférieure à 60 comprend en outre de préférence de 2 à 10 ppcm d'unités de styrène.

**10.** Composition selon la revendication 9, dans laquelle le polymère présentant une valeur de Fikentscher K inférieure à 60 comprend des unités d'au moins un monomère dont l'homopolymère présente une température de transition vitreuse inférieure à 25 °C, dans laquelle la valeur $T_g$ est calculée selon l'équation de Fox.

**11.** Composition selon la revendication 9 ou 10, dans laquelle le polymère présentant une valeur de Fikentscher K inférieure à 60 comprend des unités basées sur l'acrylate de n-butyle, ou dans laquelle le polymère présentant une valeur de Fikentscher K inférieure à 60 comprend des unités basées sur l'acrylate de n-butyle et l'acrylate de 2-éthylhexyle.

**12.** Composition selon l'une quelconque des revendications précédentes et comprenant de 0,1 à 7 % en poids du pigment organique.

**13.** Composition selon l'une quelconque des revendications précédentes et présentant une concentration volumique de pigment de 30 à 65 %, de préférence de 40 à 60 %, et/ou comprend en outre de 0 à 25 % en poids d'au moins un pigment inorganique.

**14.** Composition selon une quelconque revendication précédente et comprenant en outre de 0,01 à 3 ppcm, de préférence de 0, 03 à 1 ppcm, d'au moins un photostabilisant à amine encombrée (HALS).

**15.** Utilisation de la composition selon une quelconque revendication précédente dans une peinture de façade, un plâtre ou un enduit.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2014075969 A
- US 2015307716 A1
- US 6710112 B1
- US 4104220 A
- US 4111877 A
- US 4219454 A
- US 4319032 A
- US 4599417 A
- US 5208285 A
- DE 2535372 A1
- US 5889098 A
- US 20140243552 A


### Non-patent literature cited in the description


- Ullmann's Encyclopedia of Industrial Chemistry. VCH Weinheim, 1992, vol. A21, 169
- *Pure Appl. Chem.,* 2010, vol. 82 (2), 483-491
- **K. MATYJASZEWSKI ; T.P. DAVIS.** Handbook of Radical Polymerization. Wiley-Interscience, 2003
- *CHEMICAL ABSTRACTS,* 84632-63-5
- *CHEMICAL ABSTRACTS,* 6535-46-2